# EUROPÄISCHE PATENTANMELDUNG

(11) **EP 4 575 259 A1**
(43) Veröffentlichungstag der Anmeldung: **25.06.2025**
(21) Anmeldenummer: 24020350.5
(22) Anmeldetag: 19.12.2024
(51) Int. Cl.: F16D 65/00, F16D 65/10, F16D 65/827, F16D 65/02

(54) **TROMMELBREMSE MIT EINER RINGFÖRMIGEN ABSAUGKAMMER**

(30) Priorität: 20.12.2023 CZ 20230505
(71) Anmelder: Skoda Auto a.s., 29301 Mladá Boleslav (CZ)
(72) Erfinder: Hrdlicka, Martin, 29301 Mladá Boleslav (CZ); Jaros, Karel, 62300 Brno (CZ)

(57) **Zusammenfassung**

Trommelbremse mit einer ringförmigen Absaugkammer (7), diese Trommelbremse umfassend eine Bremstrommel (2), einen Bremsschild (3) und einen Absaugring (4). Auf dem Bremsschild (3) ist ein Absaugring (4) befestigt, dessen Kante eng an der Außenfläche der Bremstrommel (2) anliegt. Der Absaugring (4) umfasst mindestens eine Absaugmündung (8). Zwischen der Bremstrommel (2), dem Bremsschild (3) und dem Absaugring (4) ist eine ringförmige Kammer (7) abgegrenzt, die mindestens einen Filtereinsatz (12) umfasst.

## Beschreibung

### Technisches Sachgebiet

Die Erfindung bezieht sich auf die Absaugung von Staub von den Trommelbremsen.

### Stand der Technik

Die derzeit verwendeten Trommelbremsen von Kraftfahrzeugen nutzen zum Erreichen der Bremswirkung die Reibung zwischen dem rotierenden Teil der Trommelbremse, dies ist in der Regel die Innenfläche der Bremstrommel, gegen die das zweite Bremselement mechanisch gepresst wird, das auf einem feststehenden Teil der Trommelbremse befestigt ist, dies ist in der Regel der Bremsschild. Das zweite Bremselement sind in der Regel die Bremsbacken, die an der Kontaktfläche mit einem Bremsbelag versehen sind. Die Reibungswirkung zwischen dem Bremsbelag und der Innenfläche der Bremstrommel erzeugt eine Kraftwirkung, die sich im Fahrzeug als Abbremsen seiner Bewegung bemerkbar macht.

Neben der starken Hitzeentwicklung führt dieser Vorgang auch zu einem Abrieb sowohl des Bremsbelags als auch der Innenfläche der Bremstrommel. Der Abrieb in Form von Staubpartikeln vermischt sich mit der Luft, die während der Fahrt durch den Spalt zwischen der Bremstrommel und dem Bremsschild in das Innere der Trommelbremse eindringt. Die Luft spült den Innenraum durch, so dass die Luft aus dem Spalt aus dem Innenraum der Bremse, einschließlich der Staubpartikel, in die Umgebung strömt. Die Staubpartikel haben unterschiedliche Zusammensetzungen, darunter Partikel aus den durch Friktion gewischten Bremsbelägen sowie metallische Mikroschuppen aus dem Abrieb der Innenfläche der Bremstrommel. Die Größenzusammensetzung der Staubpartikel variiert von größeren Fragmenten in der Größenordnung von hundertstel Millimetern bis hin zu Nanometern. Die Forschung zeigt, dass diese Partikel eine ernsthafte Bedrohung für das menschliche Atmungssystem darstellen. Das Ausmaß der Schädlichkeit wird noch dadurch verstärkt, dass insbesondere in großen Ballungsräumen eine hohe Verkehrsdichte, ein sehr häufiges Bremsen und damit eine Verschmutzung von Umgebungen mit hoher Bevölkerungsdichte gegeben sind.

Diesen unerwünschten Bremseffekten wird auf verschiedene Weise entgegengewirkt, zum Beispiel durch Absaugen von Luft mit Staub aus dem Inneren der Trommelbremse. Diese Lösungen haben jedoch einige Nachteile. Die abgesaugte Luft hat oft eine hohe Temperatur, so dass sie beim Eintritt in die Absaugleitung und insbesondere anschließend in die Absaugvakuumpumpe thermische Schäden an beiden Teilen verursachen kann. Außerdem befindet sich die Absaugöffnung in der Regel im Bremsschild, wobei der größte Staubaustritt im Kreisring zwischen dem Rand der Trommel und dem Bremsschild auftritt, wo dieser Bereich nicht von der Absaugöffnung abgedeckt wird.

Eine weitere Variante der Staubpartikelreduzierung wird im Dokument KR10-0806080 vorgestellt, das ein Verfahren zur Entfernung von Staub aus einer Trommelbremse beschreibt, bei dem ein magnetisches Element im Bereich der Bremstrommel verwendet wird, um Metallstaub aufzufangen. Damit dieser Ansatz funktioniert, müsste die Bremse regelmäßig demontiert und die Magnete müssten gereinigt werden, was auf lange Sicht nicht tragbar erscheint.

Das Dokument KR10-0267658 beschreibt wiederum die Staubabsaugung mittels einer Rohrleitung in der Rille des Bremsbelags. Ein ähnliches Prinzip wird auch in DE4240873 beschrieben, wo das Absaugrohr an dem Rand des Bremsbelags austritt. Beide Methoden erfordern jedoch konstruktive Änderungen bereits bei der Herstellung der Bremsen, was die Verwendung bei bestehenden Einrichtungen ausschließt.

WO2008104435 A1 stellt eine Absaugmündung in der Nähe des Bremsbelags vor, wobei die Absaugung mit dem Auspuffrohr verbunden ist und die Luft durch passives Ansaugen aufgrund der Luftbewegung im Auspuffrohr abgesaugt wird.

Das Dokument JP2014219094 A wiederum offenbart die umgekehrte Möglichkeit, bei der das Auspuffgas in die Bremstrommel hineingetrieben wird, um das Auswaschen von Staubpartikeln zu unterstützen. In ähnlicher Weise beschreibt JP3236900U U die Verwendung eines Ventilators, bei dem die Luft von der Bremstrommel durch ein Rohr angesaugt und durch das andere Rohr zurückgeführt wird, wobei das Leitungssystem einen Filter enthält.

Es wäre sinnvoll, eine Lösung vorzustellen, die diese Nachteile beseitigt und eine Möglichkeit bietet, wie der Staub von Trommelbremsen effizient und kostengünstig zu beseitigen wäre, und die sowohl bei neu hergestellten als auch bei bereits vorhandenen Trommelbremsen problemlos angewendet werden kann.

### Zusammenfassung der Erfindung

Die vorgenannten Mängel werden bis zu einem gewissen Grad durch eine Trommelbremse mit einer ringförmigen Absaugkammer beseitigt, die eine Bremstrommel, einen Bremsschild und einen Absaugring umfasst, wo an dem Bremsschild ein Absaugring angebracht ist, dessen Kante dicht an der Außenfläche der Bremstrommel anliegt, wobei der Absaugring eine Absaugmündung umfasst, wobei zwischen der Bremstrommel, dem Bremsschild und dem Absaugring eine ringförmige Kammer definiert ist, die mindestens einen Filtereinsatz umfasst.

Bei einer Fahrt ohne zu bremsen wird die Trommelbremse von Luft umströmt, der enge Spalt zwischen dem Absaugring und der Außenfläche der Bremstrommel reduziert die Spülung des Innenraums der Trommelbremse mit Luft erheblich, die Bremse wird nur sehr schwach gespült. Beim Bremsen entstehen im Innenraum der Trommelbremse schädliche Staubpartikel und Wärme, die von der spülenden Luft aus dem Innenraum der Trommelbremse in die durch Teile der Außenflächen der Bremstrommel und des Bremsschilds sowie den inneren Absaugring gebildete ringförmige Kammer hinausgetragen werden.

Am Absaugring ist eine Absaugmündung ausgebildet, die an eine Vakuumpumpe oder an ein anderes aus dem Stand der Technik bekanntes Absaugsystem angeschlossen werden kann. Die Luft mit Staubpartikeln wird durch die Absaugmündung abgesaugt.

In einer vorteilhaften Ausführung umfasst die Außenfläche der Bremstrommel einen geformten Ring, dessen Kante dicht an der Außenkante des Absaugrings anliegt. Der geformte Ring kann als eine Verlängerung der Außenfläche der Bremstrommel betrachtet werden. Anschließend wird ein Spalt zwischen der Kante des geformten Rings und der Kante des Absaugrings gebildet. Die ringförmige Kammer wird dann durch Teile der Außenflächen von Bremstrommel und Bremsschild und die Innenflächen von geformtem Ring und Absaugring begrenzt.

Auf dem Bremsschild können ein oder mehrere Bremselemente, z. B. Bremsbacken, angebracht sein. Zwischen der Bremstrommel und dem Bremsschild befindet sich am ganzen Umfang ein Spalt, der in eine ringförmige Kammer mündet, aus der die mit Staubpartikeln beladene Luft durch eine Mündung entweicht. Der geformte Ring ist also im Wesentlichen der Kragen der Trommel, der sich zusammen mit der Bremstrommel dreht. Der Absaugring ist dann im Wesentlichen der Kragen des Schildes, der zusammen mit dem Bremsschild statisch ist. Diese Kragen zusammen umschließen die ringförmige Kammer, durch die die Luft mit Staubpartikeln aus dem Innenraum der Bremse kontrolliert durch die Mündung abgeführt werden kann, anstatt frei in die Atmosphäre zu entweichen. In der Drehachse der Trommel gesehen, können sowohl der geformte Ring als auch der Absaugring die Form eines Kreisrings haben.

Das Luftgemisch mit dem Staub rotiert in der ringförmigen Kammer, was durch die Rotation der Bremstrommel beim Fahren verursacht wird. Der Einlass dieses rotierenden Luftgemischs in die Absaugmündung wird durch eine richtunggebende Lasche unterstützt, die sich am Rande der Absaugmündung, nämlich unmittelbar hinter der Absaugmündung in Drehrichtung der Bremstrommel, also der Luft in der Trommel, befindet und die die Luft mit dem Staub in die Absaugmündung leitet. Die Lasche greift also in die ringförmige Kammer hinein, so dass sie die rotierende Luft aus der Kammer in die Mündung leiten kann.

Die Lasche kann entweder senkrecht zur Oberfläche des Absaugrings oder unter einem Winkel angebracht werden, wo sie einen stumpfen Winkel mit der in Luftströmungsrichtung nachgeschalteten Oberfläche des Absaugrings einschließt. Ebenso kann die Lasche ein flaches, gerades Gebilde von kreisförmiger, halbkreisförmiger, n-eckiger (mit n ≥ 3) oder unregelmäßiger Form oder sie kann eine abgerundete Oberfläche aufweisen, die der Wand der Absaugmündung folgt. Sie kann auch die Form eines 3D-Körpers annehmen, z. B. eines zylindrischen oder quaderförmigen Körpers. Allenfalls kann auch eine Kombination dieser Alternativen gewählt werden.

Der Filtereinsatz fängt einen Teil des Staubs auf und hilft somit, die abgesaugte Luft von festen Verunreinigungen zu reinigen. Vorzugsweise befindet er sich im Bereich der ringförmigen Kammer an der Innenwand des Absaugrings. Er befindet sich vorzugsweise am äußeren Umfang der ringförmigen Kammer. Noch bevorzugter ist der Filtereinsatz an der am weitesten von der Drehachse entfernten Stelle angeordnet, d. h. an der Stelle, die die Partikel durch die Zentrifugalkraft erreichen. Vorzugsweise ist der Filtereinsatz weiter von der Drehachse der Bremstrommel entfernt als der Spalt zwischen dem Absaugring und der Bremstrommel, wodurch auch die Menge an Staubpartikeln verringert wird, die aus dem Ring in die Atmosphäre statt durch die Absaugmündung entweichen.

Die Luft in der Bremse wird beim Bremsen stark erhitzt. Um thermische Schäden an der Absaugleitung zu vermeiden, sind am Absaugring Kühlrippen ausgebildet. Die Rippen können als Außen- oder Innenrippen oder als beidseitige Rippen ausgebildet sein.

Die Luft am Austritt aus der Bremse durch den Spalt zwischen dem Rand der Bremstrommel und dem Bremsschild rotiert stark, die schwereren Staubpartikel werden durch die Zentrifugalkraft radial in das Gewölbe des Absaugrings geschleudert und vollführen darin eine drehende Spiralbewegung. Während einer normalen Fahrt ohne Bremswirkung hat die vorliegende Erfindung keine negative Auswirkung auf die Funktion der Trommelbremse.

### Erklärung von Zeichnungen

Das Wesen der Erfindung wird weiterhin anhand von Ausführungsbeispielen erklärt, die mit Hilfe von beigefügten Zeichnungen beschrieben werden, die zeigen:
Fig. 1 einen Schnitt durch eine Trommelbremse mit Absaugring einschließlich der richtunggebenden Lasche und des Filtereinsatzes,
Fig. 2 einen Schnitt durch eine Trommelbremse mit geformtem Ring und Absaugring einschließlich der richtunggebenden Lasche und des Filtereinsatzes,
Fig. 3 ein Detail einer ringförmigen Kammer mit drei Filtereinsätzen.

### Ausführungsbeispiele der Erfindung

Die vorstehenden Ausführungen veranschaulichen beispielhafte Ausführungsvarianten der technischen Lösung, die jedoch keine einschränkende Wirkung hinsichtlich des Schutzumfangs haben.

### Beispiel 1

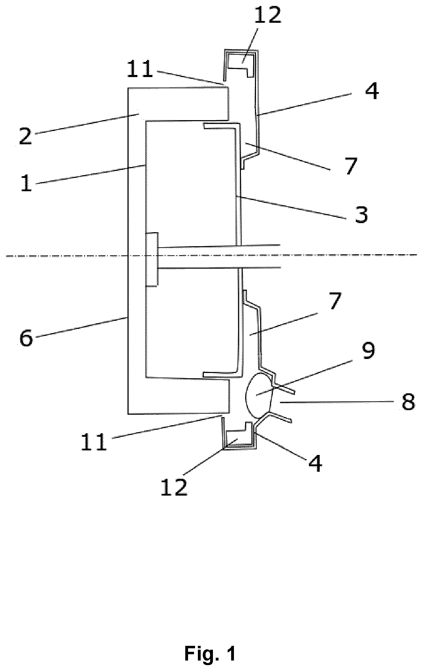

Eine beispielhafte Ausführung ist eine Trommelbremse, die aus einer Bremstrommel 2, einem Bremsschild 3 und weiteren herkömmlichen Komponenten besteht. Der Bremsschild 3 nähert sich mit seiner Außenkante der Innenfläche 1 der Bremstrommel 2. Fest mit dem Bremsschild 3 der Trommelbremse verbunden ist der aus einem separaten, kreisförmigen Formteil gebildete Absaugring 4, der mit seiner Außenkante an die Außenfläche 6 der Bremstrommel 2 anliegt, so dass der gegenseitige Spalt 11 möglichst eng ist. Dadurch entsteht die ringförmige Kammer 7, die von der Bremstrommel 2, dem Bremsschild 3 und dem Absaugring 4 begrenzt wird. Die Erfindung in dieser Konfiguration ist in der Fig. 1 zu sehen.

Der Absaugring 4 ist beispielhaft als Blechformteil ausgebildet, das im äußeren Bereich ringförmig und so geformt ist, dass der Raum der ringförmigen Kammer 7 gegenüber dem drehachsennahen Bereich vergrößert ist, um die in der Bremstrommel 2 rotierende Luft zu leiten.

An geeigneter Stelle ist am Absaugring 4 eine Absaugmündung 8 ausgebildet, die mit der Absaugvakuumpumpe (nicht dargestellt) verbunden ist.

In die ringförmige Kammer 7 am Rande der Absaugmündung 8 wird eine Lasche 9 eingeführt, die am Absaugring 4 befestigt ist. Die Lasche 9 ist hinter dem Eintritt in die Absaugmündung 8 in Strömungsrichtung der Luft angeordnet, wodurch die strömende Luft vor dem durch die Lasche 9 gebildeten Hindernis an Geschwindigkeit verliert und leichter durch die Absaugmündung 3 geleitet wird.

Die Lasche 9 besteht aus einem ausreichend festen Material, das es möglich macht, dass sie in aufgerichteten Zustand bleibt und nicht durch den Luftdruck, der durch die Bewegung der Bremstrommel 2 ausgeübt wird, gebogen wird, und ist daher in der gezeigten Ausführung aus Metall. Die Lasche 9 wird in den Eintritt der Absaugmündung 8 eingeführt und erstreckt sich über mindestens eine Hälfte der Querschnittsfläche der ringförmigen Kammer 7.

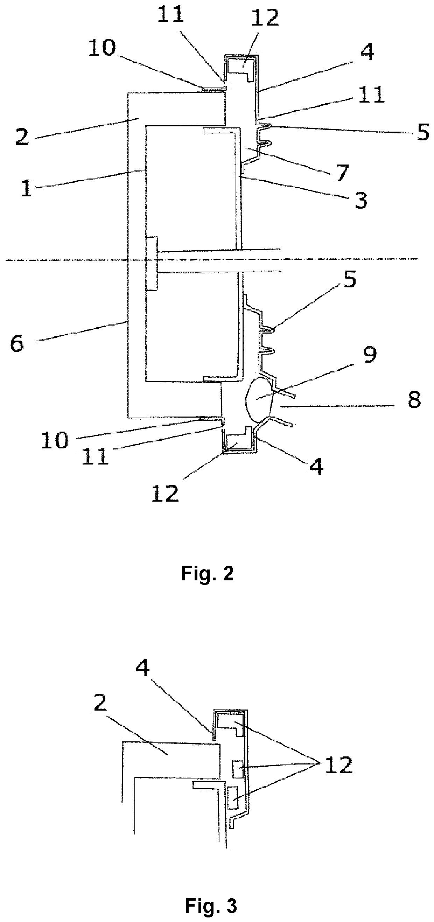

Die Lasche 9 ist ungefähr senkrecht zur Oberfläche des Absaugrings 4 angebracht, wie in der Fig. 2 dargestellt ist. Hier weicht sie um etwa 15° von der senkrechten Richtung ab, um die Luft besser in die schräge Absaugmündung 8 zu leiten. In der axialen Ansicht ist die Lasche gerade, während sie in der radialen Ansicht annähernd oval ist.

In der ringförmigen Kammer 7 ist ein Filtereinsatz 12 angebracht. Der Filtereinsatz 12 fängt einen Teil der Staubpartikel auf. Der Filtereinsatz 12 ist an der Innenseite des Absaugrings 4 angebracht, wie in der Fig. 1 dargestellt ist. Der Filtereinsatz 12 ist ein Streifen aus Filtermaterial, in einer beispielhaften Ausführung ist dies eine Mineralwolle.

### Beispiel 2

In einer bevorzugten Ausführung umfasst die Außenfläche 6 der Bremstrommel 2 einen geformten Ring 10, dessen Kante eng an der Kante des Absaugrings 4 anliegt, wie in der Fig. 2 zu sehen ist.

An der Außenfläche 6 der Bremstrommel 2 ist der geformte Ring 10 befestigt, der sich gleichzeitig mit der Bremstrommel 2 dreht. Der Ring 10 ist beispielhaft als geformter Blechstreifen ausgebildet, der in einen Kreis gedreht ist, wo ein Teil der Fläche senkrecht zum anderen Teil der Fläche steht und das Profil somit den Buchstaben L bildet. Der erste Schenkel des Profils ist starr mit dem Rand der Bremstrommel 2 verbunden, und der zweite Schenkel des Profils, der sich über den Rand der Bremstrommel erstreckt, ist von der Drehachse der Bremstrommel 2 weg gerichtet. Der erste Schenkel ist parallel zur Achse (siehe Fig. 2). In Richtung von der Drehachse weg folgt der Spalt und der Absaugring 4, der sich im Querschnitt zunächst weiter von der Drehachse entfernt, anschließend parallel zur Drehachse verläuft und dann nähert er sich zu ihr, bis er schließlich am Bremsschild 3 befestigt wird. Dadurch bildet sich hinter der Grenze der Bremstrommel eine Erweiterung, in die der Bremsstaub fällt, der dann nicht direkt in den Spalt zwischen dem geformten Ring 10 und dem Absaugring 4 fällt.

Da der geformte Ring 10 zusammen mit der Bremstrommel 2 rotiert, ist die Absaugmündung 8 am Absaugring 4 ausgebildet.

### Beispiel 3

Die in den vorangegangenen Beispielen beschriebene Trommelbremse, bei der auf dem Absaugring 4 Kühlrippen 5 ausgebildet sind, um eine effizientere Kühlung der abgesaugten Luft zu ermöglichen. Die Ausführung der Erfindung mit Kühlrippen ist in der Fig. 2 zu sehen.

### Alternative Ausführungen

Die folgenden Ausführungen unterscheiden sich von den oben genannten Ausführungen durch einige optionale Merkmale. Der Kürze halber werden für diese Ausführungen immer nur ein oder mehrere Merkmale angegeben, in denen sich diese alternative Ausführung unterscheidet. Sonstige Merkmale der alternativen Ausführungen können wie in einer der obigen Ausführungen oder wie in einer der alternativen Ausführungen umgesetzt werden.

Alternativ können mehrere Absaugmündungen 8 am Absaugring 4 ausgebildet sein. Es kann zwei davon geben und diese können sich in der oberen und unteren Spitzkehre des Absaugrings 4 befinden, oder es kann drei oder vier geben und diese sind gleichmäßig am Umfang der ringförmigen Kammer 7 verteilt.

Alternativ können auch andere nach dem Stand der Technik bekannte Absaugverfahren, wie z. B. der Anschluss an die Abgasleitung, verwendet werden.

Alternativ kann die Lasche 9 vor der Absaugmündung 8 in Strömungsrichtung der Luft angeordnet sein. Die Lasche 9 kann dann die Form eines Hindernisses mit parabelförmigem Verlauf in Richtung der strömenden Luft oder eines anderen allmählichen Hindernisses haben, wobei sich das Hindernis in der Höhe nicht weiter als in ein Drittel des Querschnitts der ringförmigen Kammer 7 erstreckt. Die strömende Luft wird dann leicht verlangsamt und in eine höhere Rotation versetzt, wobei sie an der Stelle hinter dem Hindernis leichter durch den Abzug zur Absaugmündung 8 abgeleitet werden kann.

Der Filtereinsatz wird alternativ außenseitig des Bremsschildes 3 angebracht, wie in der Fig. 3 zu sehen ist. In der Fig. 3 wird eine andere mögliche Anordnung des Filtereinsatzes 12 dargestellt.

Als Filtermaterial des Filtereinsatzes 12 werden alternativ textile Filter, Vlies aus nichtgewebten Fasern usw. verwendet. Vorzugsweise sind mehrere Filtereinsätze 12 vorhanden, vorzugsweise an der Stelle, die am weitesten von der Trommelmitte entfernt ist, wohin die Staubpartikel mitgerissen werden.

Eine weitere Möglichkeit ist, dass der Ring 10 auch nur aus einem flachen Blechstreifen besteht, der in einen Kreis gedreht wird, ohne dass der Streifenabschnitt gebogen wird. Ein solcher Ring ist fest mit der Bremstrommel verbunden und ein Teil davon ragt über den Rand der Bremstrommel 2 hinaus. Dieser Ring 10 kann alternativ auch direkt als Teil der Bremstrommel ausgebildet sein.

Der Ring 10 kann auch mehrfach durchbrochen und so geformt sein, dass der überragende Teil zunächst von der Drehachse weg zeigt und sich dann wieder zur Drehachse hin dreht.

Bei einer Trommelbremse mit einem unbeweglichen Außendeckel der Bremstrommel 2 kann dann der geformte Ring 10 auf den unbeweglichen Außendeckel montiert und die Absaugmündung 8 am geformten Ring 10 ausgebildet werden.

Für den Fall, dass der geformte Ring 10 so ausgebildet ist, dass er sich über die Bremstrommel 2 hinaus verbreitert und dann zum Spalt 11 hin verjüngt, ist eine bevorzugte Form der Lasche 9 in der Fig. 1 dargestellt, bei der die Lasche 9 in die Verbreiterung des geformten Rings 10 hineinragt. An der Innenseite des geformten Rings 10 kann der Filtereinsatz 12 angebracht werden.

Die Kühlrippen 5 können auch außerhalb des Absaugrings 4 auch am geformten Ring 10 oder an beiden diesen Teilen ausgebildet sein.

Die Rippen 5 können als Innenrippen, Außenrippen oder als beidseitige Rippen ausgebildet sein. Die strömende Luft erhält somit eine größere Kontaktfläche zur Kühlung. Vorteilhafterweise ist die Wand des Absaugrings 4 bzw. des geformten Rings 10 metallisch, also wärmeleitend und leitet die Wärme der strömenden Luft ausgezeichnet ab.

Eine weitere alternative Ausführung wird wie im obigen Beispiel 2 mit einem unterschiedlich geformten Querschnitt des geformten Rings 10 ausgeführt. Der erste Schenkel bewegt sich von der Drehachse weg und der zweite Schenkel bewegt sich näher zur Drehachse. Der geformte Ring 10 bildet somit eine Verbreiterung, die im ersten Ausführungsbeispiel durch den Absaugring 4 begrenzt wird. Der Spalt zwischen dem geformten Ring 10 und dem Absaugring 4 ist dann weiter von der Bremstrommel 2 entfernt als in der Fig. 2. In dieser Verbreiterung ist der Filtereinsatz 12 angeordnet, wie oben beschrieben, weil die Staubpartikel die Tendenz haben, sich hier abzulagern und dann im Filtereinsatz 12 aufgefangen werden.

### Bezugszeichenliste

- 1 -: **Innenfläche**
- 2 -: Bremstrommel
- 3 -: Bremsschild
- 4 -: Absaugring
- 5 -: Rippe
- 6 -: **Außenfläche**
- 7 -: **ringförmige Kammer**
- 8 -: **Absaugmündung**
- 9 -: Lasche
- 10 -: Ring
- 11 -: Spalt
- 12 -: Filtereinsatz

## Patentansprüche

1. **Trommelbremse mit einer ringförmigen Absaugkammer (7), diese** Trommelbremse umfassend eine Bremstrommel (2), einen Bremsschild (3) und einen Absaugring (4), **dadurch gekennzeichnet, dass** auf dem Bremsschild (3) **der Absaugring (4) befestigt ist, dessen Kante eng an der Außenfläche der** Bremstrommel (2) anliegt,
**wobei der Absaugring (4) mindestens eine Absaugmündung (8) umfasst,**
wobei zwischen der Bremstrommel (2), dem Bremsschild (3) und dem **Absaugring (4) eine ringförmige Kammer (7) abgegrenzt ist, die mindestens** einen Filtereinsatz (12) umfasst.

2. **Trommelbremse mit einer ringförmigen Absaugkammer (7) nach Anspruch 1, dadurch gekennzeichnet, dass ein Teil der Außenfläche der Bremstrommel (2) ein geformter Ring (10) ist, dessen Kante eng an der Außenkante des** Absaugrings (4) anliegt.

3. **Trommelbremse mit einer ringförmigen Absaugkammer (7) nach Anspruch 1** oder 2, **dadurch gekennzeichnet, dass** der Filtereinsatz (12) an der Innenseite des Absaugrings (4) und/oder des geformten Rings (10) befestigt ist.

4. **Trommelbremse mit einer ringförmigen Absaugkammer (7) nach einem der Ansprüche 1 bis 3, dadurch gekennzeichnet, dass** am Rande der **Absaugmündung (8) eine nach innen zur Bremstrommel (2) gerichtete** richtunggebende Lasche (9) befestigt ist.

5. Trommelbremse mit einer ringförmigen Absaugkammer (7) nach einem der Ansprüche 1 bis 4, **dadurch gekennzeichnet, dass** der Absaugring (4) und/oder der geformte Ring (10) mindestens eine Kühlrippe (5) umfasst.

6. Trommelbremse mit einer ringförmigen Absaugkammer (7) nach einem der vorhergehenden Ansprüche, **dadurch gekennzeichnet, dass** der Filtereinsatz (12) in der ringförmigen Kammer (7) entlang des Außenumfangs der ringförmigen Kammer (7) angeordnet ist.

7. Trommelbremse mit einer ringförmigen Absaugkammer (7) nach einem der vorhergehenden Ansprüche, **dadurch gekennzeichnet, dass** sich ein Teil des Filtereinsatzes (12) weiter von der Drehachse der Bremstrommel (2) befindet als die an der Außenfläche der Bremstrommel (2) anliegende Kante des Absaugrings (4).

8. Trommelbremse mit einer ringförmigen Absaugkammer (7) nach Anspruch 7, **dadurch gekennzeichnet, dass** der Filtereinsatz (12) in dem Teil der ringförmigen Kammer (7) angeordnet ist, der am weitesten von der Drehachse der Bremstrommel (2) entfernt ist.
